(19) Europäisches Patentamt
European Patent Office
Office européen des brevets

(11) Numéro de publication: **0 014 244**
**A1**

(12) # DEMANDE DE BREVET EUROPEEN

(21) Numéro de dépôt: 79104866.3

(51) Int. Cl.[3]: **H 04 J 1/16**

(22) Date de depôt: 04.12.79

(30) Priorité: 31.01.79 US 8008

(43) Date de publication de la demande: 20.08.80 Bulletin 80/17

(84) Etats Contractants Désignés: DE FR GB

(71) Demandeur: **International Business Machines Corporation**
Armonk, N.Y. 10504(US)

(72) Inventeur: **Hong, Ju Hi John**
**1424 Princess Ann Dr.**
**Raleigh, NC 27607(US)**

(74) Mandataire: **de Pena, Alain**
**COMPAGNIE IBM FRANCE** Departement de Propriété Industrielle
F-06610 La Gaude(FR)

(54) **Procéde et dispositif pour tester un synthétiseur de fréquences dans un modem HF.**

(57) Le modem comprend un émetteur (10) comprenant un oscillateur (22) qui fournit une porteuse à la fréquence FI, un modulateur (24) et un mélangeur (28), un récepteur (14) comprenant un mélangeur (36) et un filtre à bande étroite (40), et un synthétiseur de fréquences (18). Pour tester ce dernier, le circuit (20) commande le synthétiseur (18) de façon à ce qu'il génère un signal ayant une fréquence égale à (2+p) FI, p nombre entier positif non nul, et les commutateurs (50), (52) et (54) sont mis en position II. La présence d'une composante à la fréquence FI en sortie du mélangeur (36) est indicative du bon fonctionnement du synthétiseur (18).

EP 0 014 244 A1

./...

Croydon Printing Company Ltd

# PROCEDE ET DISPOSITIF POUR TESTER UN SYNTHETISEUR DE FREQUENCES DANS UN MODEM HF

## Description

### Domaine technique

La présente invention concerne les modems et, plus particulièrement, un procédé et un dipositif pour tester un synthétiseur de fréquences dans un modem HF.

### Etat de la technique antérieure

Dans le domaine du traitement des données, il existe une tendance à la prolifération des terminaux éloignés et d'autres dispositifs d'entrée/sortie qui permettent à un plus grand nombre d'utilisateurs d'accéder au système de traitement de données. Bien qu'avantageuse du point de vue des utilisateurs, cette prolifération présente un certain nombre de problèmes.

L'installation de terminaux éloignés exige généralement qu'un câble soit prévu entre chaque terminal et chacun des processeurs ou des unités de contrôle auxquels le terminal doit pouvoir accéder. Par exemple, si l'on désire qu'un unique terminal éloigné puisse accéder à N processeurs, il faut utiliser N câbles, et un point d'entrée/sortie de chacun des N processeurs doit être réservé à ce terminal. Cependant, étant donné qu'un terminal ne peut accéder, à un instant donné, qu'à un seul processeur, N-1 câbles et N-1 points d'entrée/sortie seront alors inutilisés, ce qui constitue une utilisation inefficace du système à laquelle il convient de remédier.

Pour pallier les inconvénients liés à la prolifération des câbles dans un système de traitement de données, on envisage d'utiliser des modems HF pour transmettre des données entre les terminaux éloignés et des processeurs centraux. L'un des avantages que présentent ces modems est qu'ils peuvent fonctionner avec plusieurs fréquences de transmission différentes. Plusieurs terminaux éloignés peuvent être reliés à travers des modems fonctionnant à des fréquences différentes à un câble HF commun, un terminal donné fonctionnant à une fréquence donnée pouvant alors transmettre et recevoir des données par l'intermédiaire de cet unique câble HF en même temps que d'autres terminaux fonctionnant à d'autres fréquences. En outre, à une fréquence donnée, plusieurs terminaux peuvent utiliser le câble unique en temps partagé. A titre d'exemple, si un modem peut transmettre ou recevoir des données à dix fréquences HF différentes et si un processeur central peut desservir six terminaux différents à une fréquence donnée en temps partagé, un maximum de soixante terminaux peuvent partager un même câble HF, rendant ainsi inutile l'emploi d'un ou de plusieurs câbles par terminal.

Pour pouvoir fonctionner avec plusieurs fréquences différentes, on prévoit en général dans chaque modem un synthétiseur de fréquences. En dépit des avantages qu'ils offrent, ces synthétiseurs doivent être testés pour s'assurer qu'ils sont capables d'engendrer la fréquence désirée. En effet, si la fréquence de sortie effective d'un synthétiseur de fréquences ne correspond pas à sa fréquence sortie nominale, le signal fourni par le modem peut interférer avec les signaux transmis par d'autres modems partageant le même câble.

Les fréquencemètres disponibles dans le commerce permettent de tester la sortie d'un synthétiseur de fréquences. Cependant, ces appareils sont beaucoup trop coûteux pour pouvoir faire partie de l'outillage normal d'un technicien chargé de la maintenance. D'autre part, exiger que le modem soit testé à l'extérieur des locaux du client, en un lieu spécifié par le fabricant, ne constitue pas une solution satisfaisante.

## Exposé de l'invention

La présente invention propose un procédé et un dispositif peu onéreux pour tester sur les lieux même de son utilisation habituelle un synthétiseur de fréquences employé dans un modem comportant un émetteur qui permet de moduler une première porteuse qui est, en général, à une fréquence intermédiaire, en fonction des données à transmettre et de convertir le signal ainsi modulé en un signal transposé en fréquence au moyen d'une seconde porteuse engendrée par le synthétiseur de fréquences. Ce modem comporte également un récepteur pourvu d'un filtre et d'un mélangeur équilibré servant à combiner le signal reçu et ladite seconde porteuse. Selon l'invention, on prévoit dans le modem des moyens pour provoquer la génération, par le synthétiseur de fréquences, d'un signal local présentant une fréquence nominale égale à (2p+1) fois la fréquence de ladite première porteuse, p étant un nombre entier positif non nul. L'appareil comprend également une ligne de bouclage permettant de connecter de façon sélective la sortie de l'émetteur à l'entrée du récepteur, isolant ainsi le modem du réseau dont il fait normalement partie. Des moyens sont également prévus pour isoler de façon sélective le mélangeur dudit synthétiseur de fréquences et pour exciter ce mélangeur au moyen de ladite première porteuse. Lorsque la sortie du synthétiseur de fréquences a une fréquence effectivement égale à (2p+1) fois la fréquence de ladite première porteuse, on obtient un signal ayant une composante à la fréquence de ladite première porteuse à la sortie du mélangeur.

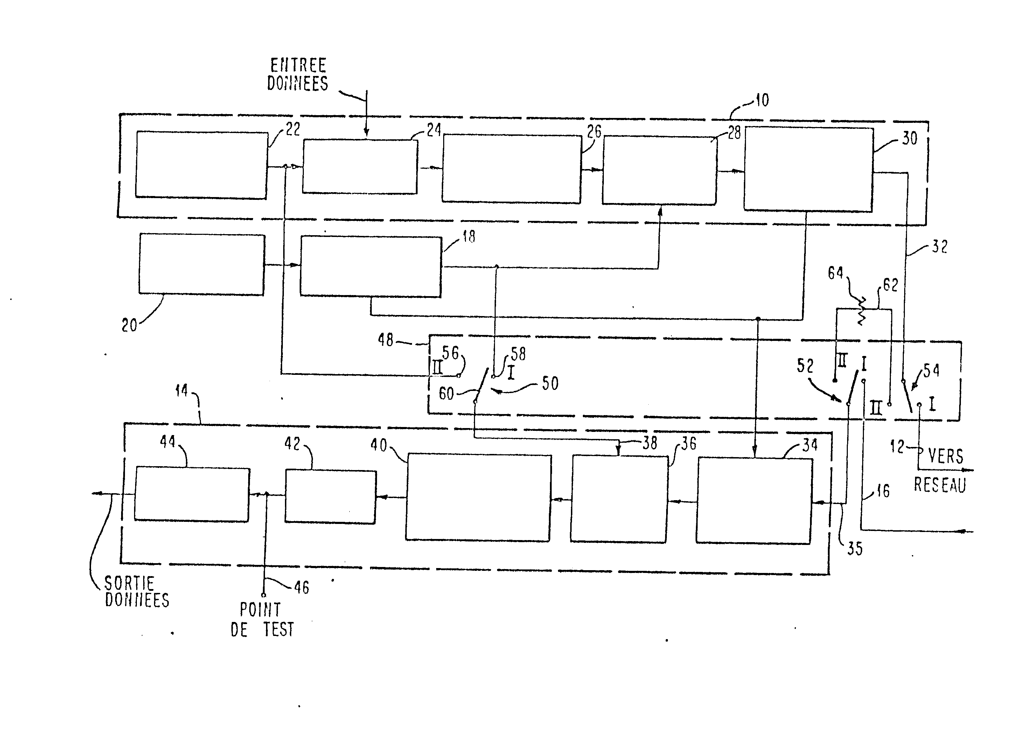

D'autres objets, caractéristiques et avantages de la présente invention ressortiront mieux de l'exposé qui suit, fait en référence au dessin annexé à ce texte, qui représente un mode de réalisation préféré de celle-ci.

## Brève description de la Figure

La Figure unique est un schéma synoptique d'un modem HF incorporant la présente invention.

## Description de l'invention

Le modem est représenté sur la figure essentiellement sous la forme d'un bloc diagramme car ses composants fonctionnels sont de type classique.

Le modem comprend un émetteur 10 qui reçoit les données à transmettre et les convertit en un signal HF modulé en phase qui est appliqué à un réseau HF par l'intermédiaire de la ligne de sortie 12 du modem. Ce dernier comprend également un récepteur 14 qui reçoit du réseau, par l'intermédiaire d'une ligne d'entrée 16, des signaux HF modulés et qui en extrait les données codées. Un synthétiseur de fréquences 18 fournit une porteuse HF à l'émetteur 10 et au récepteur 14. Ce synthétiseur engendre des signaux d'amplitude constante à différentes fréquences prédéterminées. Un tel synthétiseur comprend de façon classique une boucle à phase bloquée incluant un oscillateur commandé en tension. La tension de commande dudit oscillateur est fournie par un circuit 20 de commande de fréquence.

L'émetteur 10 comprend également un oscillateur à fréquence intermédiaire 22, de préférence à cristal, qui engendre une porteuse à un fréquence intermédiaire FI fixe prédéterminée. Cette porteuse FI est appliquée à un circuit de modulation de phase 24 qui engendre un signal modulé en phase ayant une composante fondamentale à la fréquence FI. La sortie du circuit 24 est appliquée à un filtre passe bande à fréquence intermédiaire 26 qui supprime tous les harmoniques ou les tensions parasites se produisant en dehors d'une bande de fréquences limitée centrée sur la fréquence intermédiaire FI.

Le signal FI filtré et modulé fourni par le filtre 26 est appliqué à une entrée d'un mélangeur équilibré 28, à une autre entrée duquel est appliquée une porteuse haute fréquence à la fréquence F fournie par le synthétiseur de fréquences 18. Le mélangeur 28 combine la sortie du filtre 26 et la porteuse à la fréquence F et engendre des signaux de sortie modulés présentant des composantes de fréquence importantes aux fréquences F $\pm$ FI ainsi que des lobes autour de ces composantes. Les lobes autour de F + FI et ceux autour de F - FI représentent la même information. Afin de réduire la consommation de puissance, on utilise un filtre passe bande haute fréquence accordable 30 qui ne transmet que les signaux contenus dans la bande incluant soit les lobes autour de F - FI soit les lobes autour de F + FI. La sortie du filtre 30 est appliquée à la ligne de sortie 32 de l'émetteur. La tension d'accord du filtre 30 est fournie par le synthétiseur de fréquences 18 et est déterminée par la valeur de la fréquence F du signal engendré par ce dernier.

Le récepteur du modem comprend également un filtre passe bande haute fréquence accordable 34. Ce dernier ne laisse passer que les signaux reçus sur une ligne d'entrée 35 qui sont compris dans une bande de fréquence prédéterminée centrée sur la haute fréquence accordée. Les filtres 30 et 34 sont bien sûr accordés sur la même fréquence F + FI ou F - FI. Le signal de sortie du filtre 34 est appliqué à un mélangeur équilibré 36 dans lequel il est combiné avec le signal appliqué à l'entrée 38. Ce mélangeur engendre des signaux aux fréquences égales à la somme et à la différence des fréquences des signaux appliqués à ses deux entrées. De façon plus précise, si le signal reçu présente une fréquence égale à F + FI et si le signal appliqué à l'entrée 38 a une fréquence égale à F, les signaux fournis par le mélangeur comprennent une composante de fréquence à FI et à FI + 2 F. Les signaux engendrés sont appliqués à un filtre à fréquence intermédiaire 40 qui supprime tous les signaux qui se trouvent en dehors d'une bande de fréquence centrée sur FI. Le signal filtré est ensuite écrété dans un limiteur 42 avant d'être appliqué à un démodulateur 44. Ce dernier extrait les données du signal reçu. Le récepteur comprend en outre un point de test 46 à la sortie du limiteur 42.

Afin que la précision du synthétiseur de fréquences puisse être vérifiée aisément et sans avoir à employer de dispositifs de test externes, on a incorporé au modem un circuit de test. Ce dernier comprend un ensemble 48 de trois commutateurs unipolaires à inverseur 50, 52 et 54 qui peuvent être commandés de telle sorte qu'ils passent simultanément de leurs positions normales à celles correspondant au mode de test. Le premier contact fixe 56 du commutateur 50 est directement connecté à la sortie de l'oscillateur 22, cependant que le second contact fixe 58 de ce commutateur est connecté à la sortie du synthétiseur de fréquences 18. Le contact mobile 60 du commutateur 50 est relié à l'entrée

38 du mélangeur équilibré 36.

Les commutateurs 52 et 54 font partie d'un circuit de bouclage qui comprend une boucle 62 pourvue d'un atténuateur série 64. Le contact mobile du commutateur 54 permet de connecter la ligne de sortie 32 de l'émetteur soit au réseau, par l'intermédiaire de la ligne d'entrée du réseau 12, soit à une extrémité de la boucle 62. Le contact mobile du commutateur 52 permet de connecter le récepteur 14 soit au réseau, par l'intermédiaire de la ligne de sortie 16 du réseau, soit à l'autre extrémité de la boucle 62.

Lorsque le modem fonctionne normalement, les commutateurs 50, 52 et 54 sont en position I, c'est-à-dire, le contact mobile du commutateur 50 est en contact avec le contact 58, le contact mobile du commutateur 52 est en contact avec la ligne 16 et le contact mobile du commutateur 54 est en contact avec la ligne 12, et la porteuse engendrée par le synthétiseur de fréquences 18 est appliquée aux mélangeurs 28 et 36. Le signal présent sur la ligne de sortie 32 de l'émetteur 10 est appliqué au réseau par l'intermédiaire de la ligne 12. Le récepteur 14 reçoit du réseau les signaux HF par l'intermédiaire de la ligne 16.

Afin de tester le synthétiseur de fréquences 18, on met les commutateurs 50, 52 et 54 en position II. L'entrée 38 du mélangeur 36 cesse de recevoir le signal de sortie du synthétiseur de fréquences et est connectée directement à la sortie de l'oscillateur 22. La ligne de sortie 32 est directement connectée à l'entrée de la boucle 62 cependant que l'entrée du récepteur 14 est directement connectée à la sortie de la boucle 62.

On décrira tout d'abord le cas où les signaux de commande fournis par le circuit 20 règlent la fréquence nominale du signal de sortie du synthétiseur 18 à une valeur de 3 FI, En supposant qu'aucune donnée ne soit appliquée au modulateur de phase 24 pendant le test, le signal appliqué au mélangeur équilibré 28 par l'intermédiaire du filtre 26 est une porteuse non modulée de fréquence FI. La sortie du mélangeur 28 présente des composantes de fréquence nominales à 2 FI et 4 FI. On supposera que le filtre 30 ne laisse passer qu'une bande centrée sur 4 FI. Un signal présentant une fréquence nominale de 4 FI est alors transmis par l'intermédiaire de la boucle 62 au filtre 34 du récepteur 14.

Le signal à la fréquence FI fourni par l'oscillateur 22 est appliqué à l'entrée 38 du mélangeur 36 à travers le commutateur 50 en position II. Lorsque les signaux FI et 4 FI sont combinés, les signaux primaires fournis par le mélangeur 36 ont des fréquences de 4 FI $\pm$ FI, c'est-à-dire de 3 FI et de 5 FI. Ces signaux sont éliminés par le filtre 40. On notera ici que compte tenu du fait que ses caractéristiques de fonctionnement ne sont pas linéaires, un mélangeur équilibré génère un plus de la combinaison des deux signaux appliqués à ses entrées, les combinaisons des harmoniques impairs du signal appliqué à son entrée dite "de porteuse" avec le signal appliqué à son autre entrée. Ces harmoniques sont d'amplitude d'autant plus fiable que leur ordre est élevé. Le mélangeur 36 engendrera donc également des signaux légèrement plus faibles présentant des fréquences égales à celle du signal reçu de la sortie du filtre 34, plus ou moins le troisième harmonique du signal appliqué à son entrée 38.

Etant donné que le signal HF reçu du filtre 36 possède une fréquence nominale de 4 FI et que la fréquence du signal appliqué à l'entrée 38 est égale, dans le mode de test, à FI, le mélangeur fournit des signaux aux fréquences 4 FI ± 3 FI, c'est-à-dire aux fréquences 7 FI et FI. Le signal à la fréquence 7 FI est éliminé par le filtre 40 qui laisse passer le signal à la fréquence FI. Le signal combiné possède donc une composante FI substantielle si le signal bouclé présente une fréquence effective de 4 FI. Cette dernière n'est égale à 4 FI que si le synthétiseur de fréquences 18 engendre effectivement un signal à la fréquence de test nominale choisie, c'est-à-dire 3 FI. La présence d'un signal à la fréquence FI peut être détectée au point de test 46. Si la sortie effective du synthétiseur de fréquences n'est pas égale à la sortie nominale, le mélangeur 36 ne fournit aucun signal, ou ne fournit qu'un signal très faible au point de test 46.

A titre d'exemple, on supposera que le synthétiseur de fréquences engendre effectivement un signal dont la fréquence est 2,5 FI alors qu'il devrait théoriquement engendrer un signal de fréquence 3 FI. Lorsque le signal de 2,5 FI est appliqué au mélangeur 28, les signaux engendrés auront des fréquences égales à 2,5 FI ± FI, c'est-à-dire à 1,5 FI et à 3,5 FI. Etant donné que la tension d'accord fournie par le synthétiseur de fréquences 18 correspond à la fréquence du signal qu'il fournit, seul le signal de 3,5 FI est appliqué, par l'intermédiaire du filtre 30, du commutateur 54 et de la boucle 62, à l'entrée du filtre 34. Toutefois, lorsque le signal de 3,5 FI obtenu à la sortie du filtre 34 est combiné dans le circuit 36 avec le signal à la fréquence FI appliqué à l'entrée 38, le signal fourni par le mélangeur 36 présentera des composantes aux fréquences 3,5 FI ± 3 FI, c'est-à-dire 0,5 FI et 6,5 FI. Les signaux présentant l'une ou l'autre de ces fréquences seront éliminés par le filtre 40. Par conséquent, l'on n'obtiendra qu'un faible signal, ou aucun signal, au point de test 46, à la sortie du limiteur 42.

En supposant que les filtres 30 et 34 ne laissent passer qu'une bande centrée sur 2 FI, les signaux primaires formés par le mélangeur 36 auront des fréquences de 2 FI ± FI, c'est-à-dire de 3 FI et FI. Le signal à la fréquence 3 FI sera éliminé par le filtre 40 alors que le signal à la fréquence FI pourra être détecté au point de test 46. On pourra vérifier aisément que si la sortie effective du synthétiseur de fréquences n'est pas égale à la sortie nominale, le mélangeur 36 ne fournit aucun signal, ou ne fournit qu'un signal très faible au point de test 46.

On décrira maintenant le cas où, un fonctionnement en mode de test, les signaux de commande fournis par le circuit 20 règlent la fréquence nominale du signal fourni par le synthétiseur 18 à une valeur de 5 FI. Dans ce cas, la sortie du mélangeur 28 présente des composantes de fréquence à 5 FI ± FI, c'est-à-dire à 6 FI et 4 FI.

Si les filtres 30 et 34 sont accordés de façon à ne transmettre que la fréquence 6 FI, le signal primaire fourni par le mélangeur 36 aura des composantes à 6 FI ± FI, c'est-à-dire à 7 FI et 5 FI, qui seront éliminés par le filtre 40. Le signal fourni par le mélangeur 36 à partir du troisième harmonique du signal appliqué à l'entrée 38 aura des composantes à 6 FI ± 3 FI, c'est-à-dire 9 FI et 3 FI, qui seront éliminés par le filtre 40. Le signal fourni par le mélangeur 36 à partir du cinquième harmonique du signal appliqué à l'entrée 38 aura des composantes à 6 FI ± 5 FI, c'est-à-dire 11 FI et FI. La composante à 11 FI sera éliminée par le filtre 40 alors que la composante à FI pourra être détectée au point de test 44. On n'obtiendra qu'un faible signal, ou aucun signal au point de test 46 si la sortie du synthétiseur n'est pas à la fréquence nominale 5 FI.

Si les filtres 30 et 34 sont accordés de façon à ne transmettre que la fréquence 4 FI, le signal primaire fourni par le mélangeur 36 aura des composantes à 4 FI $\pm$ FI, c'est-à-dire à 5 FI et 3 FI, qui seront éliminées par le filtre 40. Le signal fourni par le mélangeur 36 à partir du troisième harmonique du signal appliqué à l'entrée 38 aura des composantes à 4 FI $\pm$ 3 FI, c'est-à-dire à 7 FI et FI. La composante à 7 FI sera éliminée par le filtre 40 alors que la composante à FI pourra être détectée au point de test 46. On n'obtiendra dans ce cas aussi qu'un faible signal, ou aucun signal, au point de test 46 si la sortie du synthétiseur n'est pas à la fréquence 5 FI.

Après la description qui précède, l'homme de l'art comprendra que dans le procédé de l'invention dans sa forme générale, en mode de test, on doit commander le synthétiseur de fréquences 18 de façon à ce qu'il génère un signal à une fréquence (2p+1) FI où p est un nombre entier positif nominal de façon à pouvoir utiliser les harmoniques impairs du signal appliqué à l'entrée 38 du mélangeur 36. On notera toutefois que l'amplitude de ces harmoniques impairs étant d'autant plus faible que leur ordre est élevé, en pratique il sera difficile d'utiliser les harmoniques d'ordre supérieur à 5.

Dans la description ci-dessus, on a supposé qu'aucune donnée n'était appliquée au modulateur de phase 24 pendant l'exécution du test. De ce fait, aucun des signaux qui traversent l'émetteur et le récepteur du modem n'est modulé par des données. Afin de tester de façon plus rigoureuse le fonctionnement du modem, on peut appliquer des données de test au modulateur de phase 24. En supposant que le modem, y compris le synthétiseur de fréquences 18, fonctionne correctement, des données identiques devraient être extraites par le démodulateur 44. Bien qu'une non concordance entre les données appliquées au modulateur 24 et celles extraites par le démodulateur 44 ne signifie pas nécessairement que le synthétiseur fonctionne incorrectement, elle indique néanmoins l'existence d'un problème dans le modem.

Bien que l'on ait décrit dans ce qui précède et représenté sur le dessin les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

REVENDICATIONS

1.- Dans un modem du type comprenant un émetteur qui comprend un oscillateur pour fournir une première porteuse, un modulateur pour moduler ladite première porteuse par les données à transmettre et un premier mélangeur pour combiner ladite première porteuse modulée et une seconde porteuse en un signal de sortie, un récepteur qui comprend un second mélangeur pour combiner le signal reçu par le récepteur avec ladite seconde porteuse qui lui est appliquée, et un synthétiseur de fréquences pour générer ladite seconde porteuse qui est appliquée auxdits premier et second mélangeurs, un procédé pour tester ledit synthétiseur de fréquences caractérisé en ce qu'il comprend les étapes suivantes:

commander ledit synthétiseur de fréquences pour qu'il génère un signal ayant une fréquence nominale à (2p-1) fois la fréquence de ladite première porteuse, p étant un nombre entier positif non nul, le signal ainsi généré par ledit synthétiseur de fréquences étant ainsi appliqué audit premier mélangeur à la place de ladite seconde porteuse,

appliquer le signal de sortie ainsi fourni par l'émetteur à l'entrée du récepteur,

supprimer l'application de ladite seconde porteuse audit second mélangeur, et lui appliquer à la place ladite première porteuse, et

déterminer si le signal fourni par ledit second mélangeur comporte une composante à la fréquence de ladite première porteuse, la présence d'une telle composante dans le signal fourni par ledit second mélangeur étant indicative du fait sur le synthétiseur de fréquences a effectivement généré un signal ayant une fréquence égale à (2p+1) fois celle de ladite première porteuse.

2.- Procédé selon la revendication 1, caractérisé en ce que p = 1.

3.- Dans un modem du type comprenant un émetteur qui comprend un oscillateur pour fournir une première porteuse, un modulateur pour moduler ladite première porteuse par les données à transmettre et un premier mélangeur pour combiner ladite première porteuse modulée et une seconde porteuse en un signal de sortie, un récepteur qui comprend un second mélangeur pour combiner le signal reçu par le récepteur avec ladite seconde porteuse, et un synthétiseur de fréquences dont la sortie est reliée auxdits premier et seconde mélangeurs pour générer ladite seconde porteuse, un dispositif pour tester ledit synthétiseur de fréquences caractérisé en ce qu'il comprend:

des moyens pour commander ledit synthétiseur de fréquences pour qu'il génère un signal ayant une fréquence nominale égale à (2p+1) fois la fréquence de ladite première porteuse, p étant un nombre entier positif non nul, le signal ainsi généré par ledit synthétiseur de fréquences étant ainsi appliqué audit premier mélangeur à la place de ladite seconde porteuse,

des moyens pour boucler la sortie de l'émetteur sur l'entrée du récepteur,

des moyens pour déconnecter la sortie dudit synthétiseur de fréquences dudit second mélangeur et appliquer audit second mélangeur la sortie dudit oscillateur à la place de la sortie dudit synthétiseur de fréquences, et

des moyens pour déterminer si le signal fourni par ledit second mélangeur comporte une composante à la fréquence de ladite première porteuse, la présence d'une telle composante dans le signal fourni par ledit second mélangeur étant indicative du fait sur le synthétiseur de fréquences a effectivement généré un signal ayant une fréquence égale à (2p+1) fois celle de ladite première porteuse.

4.- Dispositif selon la revendication 3, caractérisé en ce que p = 1.

ENTREE DONNEES
VERS RESEAU
POINT DE TEST
SORTIE DONNEES
10
12
14
16
18
20
22
24
26
28
30
32
34
35
36
38
40
42
44
46
48
50
52
54
56
58
60
62
64
I
II

0014244

Office européen des brevets

# RAPPORT DE RECHERCHE EUROPEENNE

Numero de la demande

EP 79 10 4866

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl.) |
|---|---|---|---|
| A | ELECTRICAL COMMUNICATION, vol. 48, no. 3, 1973 London GB LISIMAQUE: "New generation high frequency single sidebande military field communications equipments", pages 275-283. * Page 276, colonne de droite, ligne 9 à page 277, colonne de gauche, ligne 22; figure 1; page 281, colonne de gauche, lignes 1-8 * | 1,3 | H 04 J 1/16 |
| | -- | | |
| A | FUNKSCHAU, vol. 46, no. 9, avril 1974, Munich, DE KANNAPINN: "Moderner KW-Sende-Empfänger für SSB, CW und Funkfernschreiben", pages 331-334. *Page 332, colonne de milieu, ligne 7 à page 334, colonne de gauche, ligne 29; figure 5 * | 1,3 | |
| | -- | | |
| A | IBM TECHNICAL DISCLOSURE BULLETIN, vol. 9, no. 3, août 1966, New York, US BERGLUND: "Modern Wrap Back Test", page 278. * en entier * | | |
| | -- | | |
| A | US - A - 4 048 564 (GLEESON) * Colonne 1, lignes 54-65; colonne 6, lignes 28-37; figures 1,2 * | 1,3 | |
| | ---- | | |

DOMAINES TECHNIQUES RECHERCHES (Int. Cl.)

H 04 J 1/06
H 04 J 1/16
H 04 L 1/24
H 04 B 17/00
1/38
1/40
1/70

CATEGORIE DES DOCUMENTS CITES

X: particulièrement pertinent
A: arriere-plan technologique
O: divulgation non-ecrite
P: document intercalaire
T: theorie ou principe a la base de l'invention
E: demande faisant interference
D: document cite dans la demande
L: document cite pour d'autres raisons

&: membre de la meme famille, document correspondant

Le present rapport de recherche a ete etabli pour toutes les revendications

| Lieu de la recherche | Date d'achevement de la recherche | Examinateur |
|---|---|---|
| La Haye | 06-05-1980 | YOULE |